# EUROPEAN PATENT SPECIFICATION

(11) **EP 2 045 971 B1**
(45) Date of publication and mention of the grant of the patent: **07.12.2011**
(21) Application number: 07019478.2
(22) Date of filing: 04.10.2007
(51) Int. Cl.: H04L 12/42

(54) **Data network with time synchronization mechanism**
Datennetzwerk mit Zeitsynchronisationsmechanismus
Réseau de données avec mécanisme de synchronisation temporelle

(43) Date of publication of application: 08.04.2009
(73) Proprietor: Harman Becker Automotive Systems GmbH, 76307 Karlsbad (DE)
(72) Inventor: Bähren, Frank, 75173 Pforzheim (DE); Schöpp, Harald, 76275 Ettlingen (DE)
(74) Representative: Grünecker, Kinkeldey, Stockmair & Schwanhäusser

(56) References cited:
- EP-A- 1 503 543
- JP-A- 7 230 414
- US-A- 4 779 087
- US-A- 6 144 675
- US-A1- 2006 026 471
- US-A1- 2006 187 932

## Description

### FIELD OF THE INVENTION

The invention relates to a method and a system for matching frame counter values of a timing master and at least one slave in a synchronous network having a ring topology, and a computer-readable medium.

### RELATED ART

The constant need to quickly transfer growing amounts of data has transformed highspeed networks into an essential part of the various existing networks.

Especially, in the automotive environment, the communication of a variety of sophisticated information systems and the interaction with a human user becomes more and more important. Therefore, for instance, Media Oriented Systems Transport (MOST) has been developed and optimized, which is a fiber optic network that provides a very efficient and low-cost mechanism for transporting high volumes of data. It is a low-overhead and low-cost interface used for communicating with a wide variety of peripheral devices in the car environment, like microphones and speakers, audio/video streaming or navigation systems.

MOST is a network technology based on synchronous data communication. It uses polymer optical fiber (POF) and supports up to 64 nodes. MOST supports synchronous, asynchronous, and control data channels, as well as plug-and-play functionality. MOST is comprised of a physical layer, transport layer, link layer, network management, and application programming interfaces.

Generally, all network elements within a synchronous network, e.g. synchronous telephony networks, must operate exactly in synchronization with each other, that is, the nodes of a network must fulfil certain network synchronization requirements in order to be able to cooperate. These requirements must be fulfilled also when maintenance work is performed on the network and in particular, in cases when errors occur. In many cases, high demands are also put on the robustness of the network.

One of the major problems encountered in synchronous networks is the required time for resynchronization after a synchronization loss or frame loss has occurred, for instance during the attachment of a new slave node to the network.

Another problem that has not been satisfactory solved in the prior art is the provision of a network wide high precision time base in relation to a masters reference.

In US 2002/0003848 A1 a synchronous network is presented having a plurality of nodes which can output a synchronization signal which defines a reference time for the synchronization of the nodes.

JP 07 230414 A aims at detecting an intermittent fault before a fixed fault occurs to the looped bus of a multiprocessor system. A master node of the system provides a token frame, including a count field and a fault information bit field. Based on the value of the count field of the token frame, the slave sets a fault occurrence mark information in its node area of the fault information bit field and sends the token frame out to the bus. Upon the master node receiving the token frame, it detects at which part between the slave nodes an intermittent fault has occurred from the node area information of the fault information bit field.

US 2006/187932 A1 relates to improving error detection during transmission of telegrams in a network. The information signaling a change in the count value is transmitted as a part of the telegram's useful data component, instead of the transmitting the entire value. Further, in case of an error occurring on the network, telegram counters of the communication means of the network are synchronized by transmitting resetting information via the network that indicate a reset of the sender's counter.

EP 1 503 543 A1 provides a data transmission apparatus capable of rapidly detecting the occurrence of a momentary power interruption in a data transmission system comprising a plurality a data transmission apparatuses, which are interconnected in a ring configuration.

US 2006/0026471 A1 relates to a loop status monitoring apparatus that can identify a device with a connection failure occurred when no signal failure is found.

US 4,779,087 provides an improved loop transmission system with frame synchronization control in which, taking-in of a node, bypassing of a node, taking-in of a sub-loop, or bypassing of a sub-loop, the duration of the interruption of a transmission through the transmission loop is reduced and the loss of information from the information being transmitted is minimized accordingly.

US 6,144,675 aims at providing a clock regeneration apparatus disposed in each transmission unit to support timing signal distribution in a ring-shaped synchronous data transmission network with a plurality of external clock sources being designed to maintain the timing synchronization of all transmission units in the network with a single external clock source, even in a fault situation where a link between transmission units is disrupted.

Solving these shortcomings would be a great benefit for increasing the user-friendliness and for reducing the costs of speech recognition system due to an intelligent memory management.

### Summary of the invention

Hence, there is the need to improve the synchronization procedures of synchronous networks. Solving the above mentioned shortcomings would be a great benefit in order to minimize the required time for resynchronizing a synchronous network after the occurrence of an error.

At least one of these needs is addressed and solved by the subject matter of the independent claims. Advantageous embodiments are subject to the dependent claims.

A major concept of the invention is to provide a system-wide time base by utilizing the number of transmitted data frames in the underlying synchronous network. This is in contrast to other approaches, for instance, distributing a common time base or clock information in networks. If the applications running on the slaves are enabled to access the number of transmitted data frames, this could allow the application layer to adapt to the system-wide time base. Thereby, a synchronous playback of audio/video data on a plurality of terminals attached to the network is possible, as this common time base can be e.g. used to define delays between audio and video playback on the application level.

According to one aspect of the invention, transmitted frames of a continuous data stream are counted by a timing master. In the event of a detected synchronization loss, the timing master transmits a message to all slaves, which are connected to the network, including a synchronization frame counter value so as to synchronize the frame counter value of the timing master and the frame counter value of the slaves to a common frame counter value.

Between the transmissions of these synchronizing messages by the timing master, the slaves may continue with counting the received frames and may provide their frame counter value to applications executed by the slaves.

One advantage of the invention may be that transmission errors, respectively a synchronisation loss or a frame loss, can be detected reliably and quickly so as to avoid recognizable effects of a synchronization loss as therewith resynchronization of the network is possible in short time.

The following embodiments of a system for matching frame counter values of a timing master and at least one slave in a synchronous network may for example be realized in a vehicle-based environment, such as a synchronous MOST network or the like.

According to one embodiment of the invention, a method for matching frame counter values of a timing master and at least one slave in a synchronous network having a ring topology is provided. According to this method, frames of a continuous data stream, transmitted by the timing master, may be counted by means of a frame counter. Further, frames of the continuous data stream received from the timing master may be counted by the at least one slave by means of a frame counter.

In case of the timing master detecting a loss of synchronization or loss of a transmitted frame in the continuous data stream, the timing master may transmit a message comprising a synchronization frame counter value. Thereupon, the frame counter value at the at least one slave may be set to the synchronization frame counter value received from the timing master.

According to another embodiment of this invention, the synchronization frame counter value may be used for synchronizing the frame counter value of the timing master and the frame counter value of the at least one slave to a common frame counter value.

In a further embodiment of this invention, the frame, at which the loss of synchronization has been detected by the timing master, may correspond to the frame counter value n, and wherein the synchronization frame counter value may correspond to the frame counter value n+1.

According to another embodiment of this invention, the synchronization frame counter value may correspond to the number of frames that have been successfully transmitted by the timing master before a loss of synchronization is detected.

According to another embodiment of this invention, it may be detected by the timing master whether a loss of synchronization in the continuous data stream has occurred.

In a further embodiment of this invention, detecting whether a loss of synchronization in the continuous data stream has occurred may comprise determining that a preamble of a transmitted frame is not received by the timing master at an expected point in time.

According to another embodiment of this invention, it may be detected whether a loss of a transmitted frame in the continuous data stream has occurred.

Further, according to another embodiment of this invention, detecting whether a loss of a transmitted frame in the continuous data stream has occurred may comprise determining a change in the number of slaves during operation of the synchronous network.

In a further embodiment of this invention, the timing master may transmit the message, comprising its synchronization frame counter value, periodically.

According to another embodiment of this invention, the timing master may transmit the message comprising its synchronization frame counter value together with a timestamp of a timing master's reference clock.

Further, according to another embodiment of this invention, the synchronization frame counter value or the synchronization frame counter value together with a timestamp may be comprised in a respective field of a control data section of a transmitted frame.

According to another embodiment of this invention, frames may be transmitted periodically by the timing master.

In a further embodiment of this invention, the at least one slave may synchronize with the timing master's clock reference by determining a real-time clock reference based on the last received timestamp of the timing master's clock reference and the number of frames that have been received since the reception of the timestamp of the timing master's clock reference.

According to another embodiment of this invention, an application executed by the at least one slave may be enabled to access the determined real-time reference.

Further, according to another embodiment of this invention, an application executed by the at least one slave may be enabled to access the frame counter value of the slave.

In a further embodiment of this invention, a network controller of the slave may provide the frame counter.

According to another embodiment of this invention, changes in the states of the at least one slave or any events at the at least one slave may be monitored and stored together with a respective frame counter value, and wherein the application executed by the at least one slave may be enabled to access the respective stored information on changes in the states of the at least one slave or any events at the at least one slave together with the frame counter values.

Further, according to another embodiment of this invention, the synchronous network having a ring topology may be a MOST network implemented in an automotive environment.

Another embodiment of the invention relates to a timing master in a synchronous network having a ring topology. The timing master includes a processing unit for maintaining a frame counter adapted to count frames of a continuous data stream being transmitted by a transmitter of the timing master. The processing unit may be also adapted to detect a loss of synchronization or loss of a transmitted frame in the continuous data stream. The transmitter may be further adapted to transmit a message comprising a synchronization frame counter value in case of the processing unit detecting a loss of synchronization or loss of a transmitted frame in the continuous data stream.

The invention according to another embodiment relates to at least one slave in a synchronous network having a ring topology. According to one embodiment, the at least one slave includes a processing unit for maintaining a frame counter adapted to count frames of a continuous data stream received from a timing master. The processing unit further may be adapted to set the frame counter value at the at least one slave to a synchronization frame counter value received from the timing master.

The invention according to another embodiment provides a system for matching frame counter values of a timing master and at least one slave in a synchronous network having a ring topology. According to one embodiment, the system may include the timing master and the at least one slave.

According to a further embodiment, a computer-readable medium is provided. The computer-readable medium is storing instructions that, when executed by a timing master, may cause the timing master to initiate matching frame counter values of the timing master and at least one slave. This may be performed by counting frames of a continuous data stream being transmitted by a transmitter of the timing master. A loss of synchronization or loss of a transmitted frame in the continuous data stream may be detected. In case of detecting a loss of synchronization or loss of a transmitted frame in the continuous data stream, a message may be transmitted comprising a synchronization frame counter value.

According to another embodiment, a computer-readable medium is provided. The computer-readable medium is storing instructions that, when executed by the at least one slave, may cause the at least one slave to adapt its frame counter value. This may be performed by counting frames of the continuous data stream received from a timing master. Further, the frame counter value at the at least one slave may be set to a synchronization frame counter value received from the timing master.

### BRIEF DESCRIPTION OF THE DRAWINGS

In the following, the invention is described in more detail in reference to the attached figures and drawings.
- **Fig. 1**: illustrates a general synchronous network having a ring topology according to an exemplary embodiment of the invention,
- **Fig. 2**: illustrates a flow chart with the necessary steps for performing matching frame counter values of a timing master and at least one slave according to an exemplary embodiment of the invention,
- **Fig. 3**: illustrates the detection of a loss of synchronization according to an exemplary embodiment of the invention,
- **Fig. 4**: illustrates the detection of a loss of a transmitted frame according to an exemplary embodiment of the invention,
- **Fig. 5**: illustrates the detection of a change in the number of slaves during operation of the synchronous network according to an exemplary embodiment of the invention, and
- **Fig. 6**: illustrates the interface between the network management layer and the application layer according to an exemplary embodiment of the invention.

### DETAILED DESCRIPTION OF THE INVENTION

Before discussing the different exemplary embodiments of the invention in further detail, several terms frequently used herein will be defined in the following.

A timing master in the synchronous network transmits data frames periodically to all slaves attached to the network. Further, the timing master determines the bit rate and frame structure and performs detection of a synchronization loss or frame loss and the resynchronization of a synchronous network.

A preamble indicates the beginning of a new data frame. Preambles are used for synchronizing slave nodes, respectively locking the slave to the timing master's transmitted bit stream. A preamble of a MOST frame, for instance, may be a code violation so as to mark the beginning of a next frame. A preamble may also be an escape sequence, or the like. Once the network is set up and synchronized, the timing master exactly knows, when the preambles have to arrive due to the fixed frame structure within the continuous data stream, defined by the timing master.

A slave in the synchronous network detects a preamble and synchronizes to the frame the preamble corresponds to. Thus, a slave synchronizes to the bit rate that is predetermined by the timing master.

A frame counter value of the timing master denotes a counter value which is incremented by the timing master after transmitting a frame. A frame counter value of one of the slaves denotes a value which is incremented by the at least one slave upon detecting and completely receiving a frame.

A timestamp is used for storing the point in time an event in the network has been occurred. Storing of a point in time may be carried out by the timing master upon detecting a failure, synchronization loss, a frame loss or any other event on the network. The time used thereby corresponds to the timing master's reference clock.

A synchronization frame counter value is a counter value which corresponds to the frame counter value of the timing master and which is utilized by the timing master for transmitting its frame counter value to the slaves of the network. Upon receiving the synchronization frame counter value, the slaves attached to the network are able to set their frame counter value to the synchronization frame counter value.

A sync-message denotes a message to be transmitted to the slaves and which includes either the synchronization frame counter value or a combination of the synchronization frame counter value together with a timestamp of for instance an event occurred in the network.

The timing master may transmit such a sync-message during the set-up, respectively in the initialization phase of a network or continuously in predetermined intervals so as to periodically synchronize the network even while the network is already synchronized and operating in normal mode without any failures.

Advantageously, the number of bits for the frame counter is chosen such that a large range of values may be represented. For instance, the frame counter may consist of at least 32 bit. This allows ensuring that no overflow or wrap-around occurs between the transmission respectively reception of two sync-messages. The time interval at which the counter may be incremented without any overflow or wrap-around is the relation between the bit rate and the frame length. For example, in a MOST50 network together with a counter representing 32 bits, even if a slave has not received a sync-message within a time period of approximately 24 hours, still no overflow or wrap-around has occurred at the respective counter.

For instance, it may be possible that a smaller range of values may be represented by either the counter of the timing master and the slaves, if the range of values is equal. In such a case, an overflow or wrap-around occurs at the same time at the timing master and all slaves so that synchronization is not lost.

Hence, in the time interval between the reception of two sync-messages, the slaves provide at any time an exact and unambiguous time reference which may be used by applications running at the slaves.

As already previously mentioned, the major concept of the invention is to provide a system-wide time base by utilizing the number of transmitted data frames in the underlying synchronous network. In case of the network being synchronized, the timing master counts the transmitted frames and each of the slaves counts the received frames and the values are stored as a frame counter value. As long as no error occurs, all frame counter values are equal.

According to the invention, the timing master is capable of detecting whether a frame loss has occurred due to for instance an interruption of the network or a loss of synchronization has been occurred due to e.g. the attachment of a further slave or a delay in the transmission of frames. In contrast to other approaches, for instance, distributing a common time base or clock information in networks, the invention suggests to resynchronize the network by transmitting by the timing master its frame counter value to all slaves so as to match all frame counter values.

The applications running on the slaves are enabled to access the frame counter values which therewith could allow the application layer to adapt to the system-wide time base. By means of the quick resynchronization a synchronous playback of, for instance, audio/video data on a plurality of terminals attached to the network can be maintained, as this common and unambiguous time base can be e.g. used to define delays between audio and video playback on the application level. For instance, the exact time reference may be used for a lip sync playback of audio/video content on a plurality of screens of the network. Another example may be the correct processing respectively playback of a plurality of camera signals/contents.

According to one embodiment of the invention, the synchronous network is employed in an automotive environment, whereby the slaves of the network denote, for instance, the various components like multimedia devices. For example, the network may be an optical MOST network used in a car, wherein the attached components may be a navigation system, speakers, displays, and the like.

In another embodiment of the invention, the network may be a small ring network, wherein the transmission delay may be shorter than the time necessary for the transmission of a frame. That is, a frame to be transmitted may even be received by the timing master although not having been sent completely by the timing master.

The following figures show how the detection of a synchronization or frame loss is detected and how exactly the resynchronization is carried out by the timing master.

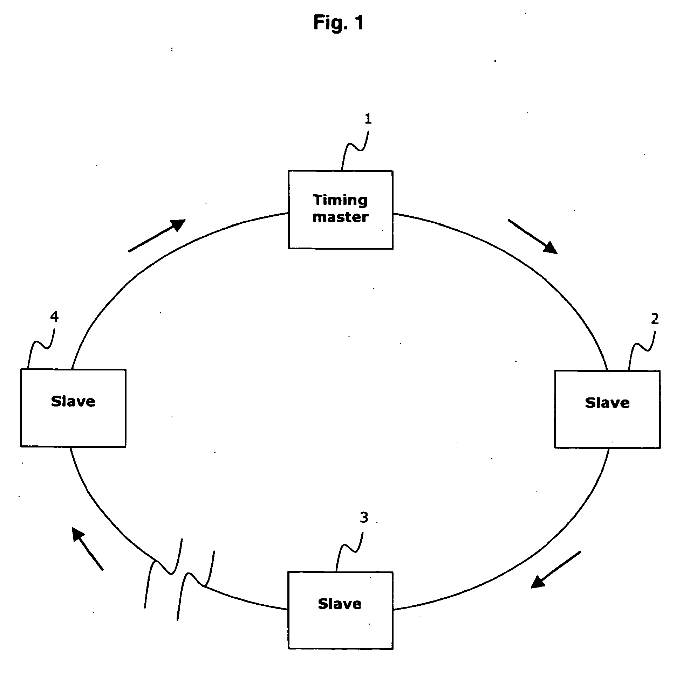

Fig. 1 illustrates a synchronous network having a ring topology according to an exemplary embodiment of the invention. A timing master 1 determines a bit rate and then continuously feeds data frames into the network to be received by all slaves attached to the network. The direction of transmission is indicated by the arrows in Fig. 1. The network can include a plurality of slaves, whereby only three slaves are shown for exemplary purposes. In particular, these are slave 2, slave 3, and slave 4.

The network may be any optical synchronous network, for example an SDH network or a MOST network.

A MOST network, for instance, is a ring shaped network is a networking standard intended for interconnecting multimedia components in automobiles and other vehicles. Within the synchronous base data signal, multiple streaming data channels and a control channel are transported. The control channel is used to set up what streaming data channels the transmitter and receiver are to use. Once the connection is established, data can flow continuously and no further addressing or processing of packet label information is required. The bandwidth of the streaming data channels is always available and reserved for the dedicated stream so there are no interruptions, collisions, or slow-downs in the transport of the data stream.

As shown in the MOST specification (chapter 3.1.3.1), which can be downloaded at http://www.mostcooperation.com/downloads/index.html?dir=291, in a MOST 25 network, for instance, a frame consists of 512 bits respectively 64 Bytes. The first Byte is reserved for administrative purposes like the preamble. The next 60 Bytes may contain packet or streaming data. Another 2 bytes are reserved for control messages and the last byte is again used for administrative purposes like a status and/or parity bits.

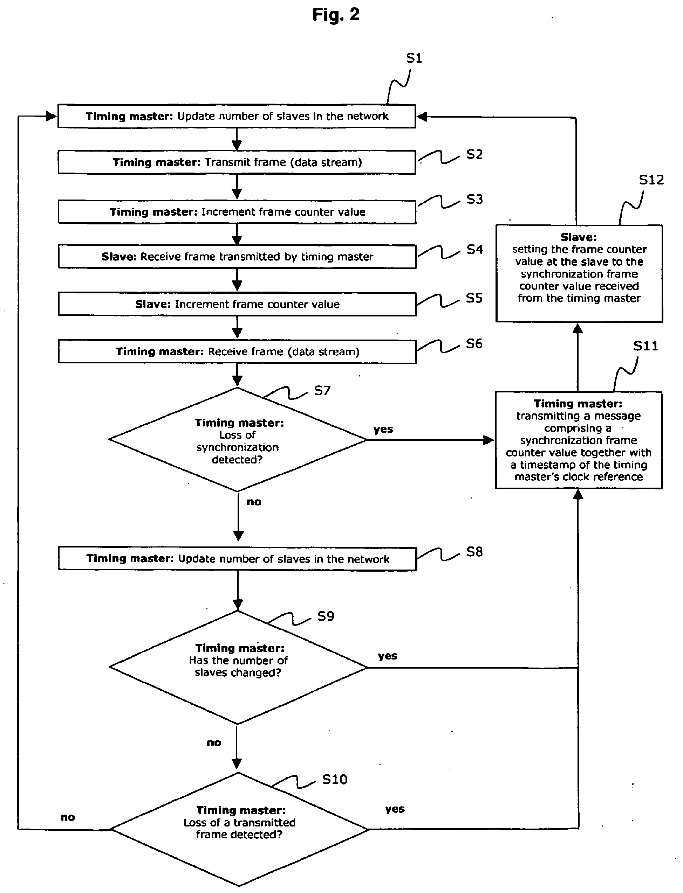

Fig. 2 illustrates a flow chart with the necessary steps for performing matching frame counter values of a timing master and at least one slave according to an exemplary embodiment of the invention.

First, the timing master updates the number of known slaves at step S1. This may be for example performed by initially transmitting a frame for counting the slaves onto the ring network. Upon a slave receiving such a frame, the slave increments the counter value. If each slave attached to the network increments this counter value, the timing master, which receives the returned frame for counting the slaves, is able to determine the number of slaves. Such a frame for counting the slaves may be transmitted by the timing master periodically. In step S1, the timing master registers the current number of slaves which are present on the network to that point in time.

In step S2, the timing master may transmit one data frame of the continuous data stream which is to be fed into the ring network. Upon having transmitted the data frame, the timing master increments a frame counter value in step S3, which represents the number of transmitted frames by the timing master.

Next, at step S4, the first slave may receive the data frame which has been transmitted by the timing master. For instance, the first slave may be slave 2 as shown in Fig. 1. After having received the frame, the slave 2 increments its own frame counter value as shown in step S5. Dependent on how many slaves are attached to the network, steps S4 and S5 are repeated for each slave.

In step S6, the timing master receives its previously sent data frame (due to the network having a ring topology). By receiving the frame, the timing master can detect successful transmission of the frame.

In step S7, the timing master verifies whether loss of synchronization has occurred. The detection procedure may be performed by comparing the sent data frame with the same received frame in terms of the preamble having been received at an expected point in time. Generally, for the determination of a synchronization loss, it is sufficient to only consider the preamble of a frame as such a preamble comprises a unique bit sequence which never appears in the payload section of a frame.

If, for instance, a delay in forwarding the frames at the slave has been occurred, the preamble of the returned frame is received by the timing master at another time than expected. Then, the network is not synchronous any longer. In such a case, the timing master unambiguously detects the delayed preamble of a frame and determines that synchronization of the network is lost. Such a case is represented in step S7, where a synchronization loss has been determined. The timing master may then proceed with step S11 for starting the resynchronization of the network. Step S11 will be explained in a following paragraph below.

If at step S7 has been determined that no synchronization loss has been detected, the timing master proceeds with step S8, whereby the number of slaves may be updated. As already mentioned for step S1, each slave has incremented a counter value of a frame for counting the slaves after such a frame has passed the respective slave. As a result, the counter value of the frame for counting the slaves may represent the exact number of slaves attached to the ring network.

At step S9, the timing master compares the latest received counter value of the frame for counting the slaves with the stored number of slaves represented in the stored counter value for counting the slaves according to step S1. Thereby, it is detected by the timing master whether the number of slaves has changed during the transportation of the latest transmitted frame by the timing master and thus, whether a loss of synchronization has been occurred.

If at step S9 has been detected that a loss of synchronization has not been occurred respectively, the number of slaves has not changed during the transportation of the latest transmitted frame on the ring network, the timing master again proceeds with step S1.

At step S10, the timing master determines whether a loss of a transmitted frame has been occurred. If the timing master determines at step S10 that a loss of a transmitted frame has been detected, the timing master may proceed with step S11 for starting the resynchronization of the network. Step S11 will be explained in the following in more detail. If the timing master determines at step S10 that a loss of a transmitted frame has not been detected, the timing master may proceed with step S1.

Summarizing, the above mentioned steps S1 to S10 represent the normal synchronized operation mode of the synchronous network. In such a normal operation mode, the frame counter value of the timing master and the values of the frame counter at the slaves are equal.

If, however, the timing master determines at step S9 that the number of slaves has changed during the transportation of the latest transmitted frame on the ring network, the timing master proceeds with step S11. As a result, the timing master determines that the network lost its synchronization and therefore must be resynchronized. In order to again having synchronized all slaves, step S11 will be carried out, which is explained in the following.

According to step S11, the timing master carries out the resynchronization of the slaves by transmitting a message which includes a synchronization frame counter value. The synchronization frame counter value is the frame counter value of the timing master and represents the number of the actual transmitted frames. The message further may also include a timestamp of the timing master's reference clock in order to document the exact point in time, a synchronization loss or frame loss has been occurred.

After transmitting the message by the timing master, each slave receives this message and matches its own frame counter value with the synchronization frame counter value included in the received message. This is represented by step S12 in Fig. 2.

Consequently, upon all slaves having updated and matched their frame counter value, all frame counter values including that of the timing master are equal. As the network then is resynchronized, the steps S1 to S10 will be carried out in a loop wise manner for every data frame.

Summarizing the concept as shown by Fig. 2, a loss of synchronization respectively loss of a transmitted frame can be detected reliably and quickly. Upon detecting the synchronization loss, the timing master reacts in a very short time and transmits a synchronisation message so as to resynchronize all slaves to the timing master and avoid therewith recognizable effects of a synchronization loss. As already mentioned in the introductory portion, multimedia applications require exact synchronized terminals respectively slaves more and more.

Even in case of no synchronization loss has been occurred, each slave increments its own frame counter value after each received data frame. Additionally, the slaves provide applications, running at the respective slaves, with their frame counter value so as to make sure that an exact time base is available for the applications, running at the slaves, at any time.

In other words, a slave may wrongly detect a frame, respectively a preamble of a frame or even may not detect a frame or preamble at all. Such a situation may occur, if the slaves do not synchronize themselves to the predetermined clock rate respectively to the predetermined frame structure in the data stream. As a consequence, the network is not synchronized any longer, which is called "Unlock-Status". Due to the wrong synchronization of the slave, frames cannot be forwarded correctly, which will be detected by the timing master. The timing master then resynchronizes the network (as also shown by the timing diagrams of the following figures).

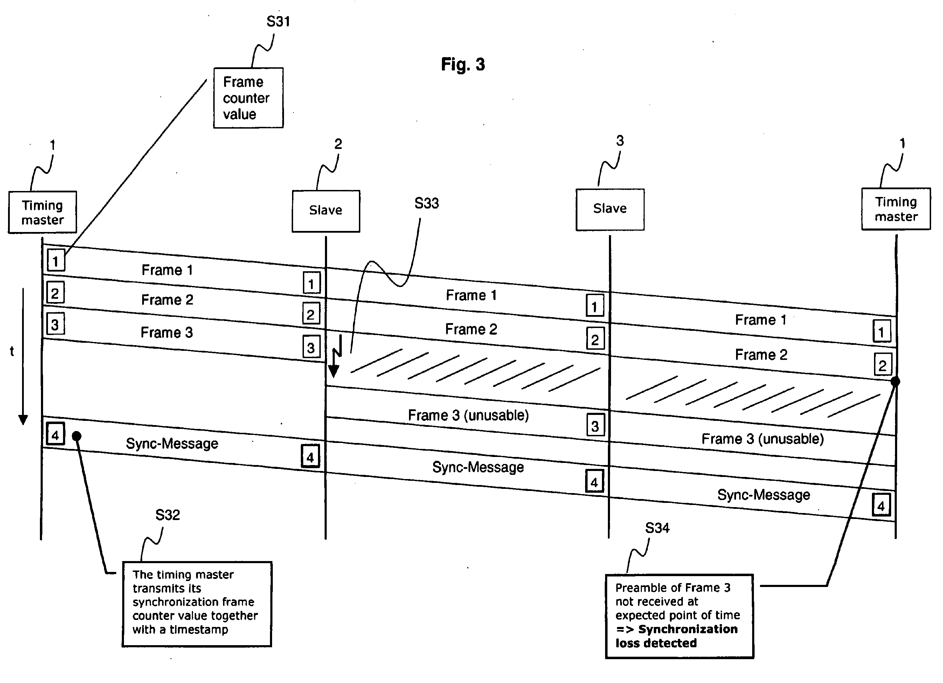

Fig. 3 illustrates the detection of a loss of synchronization according to an exemplary embodiment of the invention. Shown is a timing diagram which includes a timing master 1 and, for illustrating purposes, only two slaves (slave 2 and slave 3). The left-most shown timing master 1 represents the timing master transmitting frames, wherein the right-most shown timing master 1 represents the timing master receiving frames. Fig. 3 also shows the frame counter values counted by the timing master 1 (S31), which are incremented after each transmitted frame. Also shown are the frame counter values of both slaves.

As indicated by S33, slave 2 causes a delay in forwarding frame 3 to the slave 3. Hence, the delayed forwarding of frame 3 does not correspond to the frame structure respectively clock cycle predetermined by the timing master 1. As a consequence, the timing master 1 is not able to receive the preamble of the previous sent frame at the expected point in time and determines that a loss of synchronisation has occurred (S34). The detection of synchronization loss at S34 is equivalent to step S7 of Fig. 2. As a result, the transmitted frame 3 cannot be used anymore.

Then, the timing master 1 transmits a message, which is indicated in Fig. 3 as sync-message, to all slaves of the network including its synchronization frame counter value and possibly also together with a timestamp (S32). Hereby, the frame, at which the loss of synchronization has been detected by the timing master 1, corresponds to the frame counter value n, and wherein the synchronization frame counter value corresponds to the frame counter value n+1. In the example of Fig. 3, the frame counter value at which the loss of synchronization has been detected is "3" and the synchronization frame counter value which is included in the sync-message is "4". However, the synchronization frame counter value may also correspond to the number of frames that have been successfully transmitted by the timing master 1 before a loss of synchronization has been detected. In such a case, the synchronization frame counter value would be "2", as in the example of Fig. 3 only two frames have been transmitted successfully. After the slaves have received the message together with the synchronization frame counter value, they resynchronize by matching their frame counter value with the received synchronization frame counter value of the sync-message from the timing master 1.

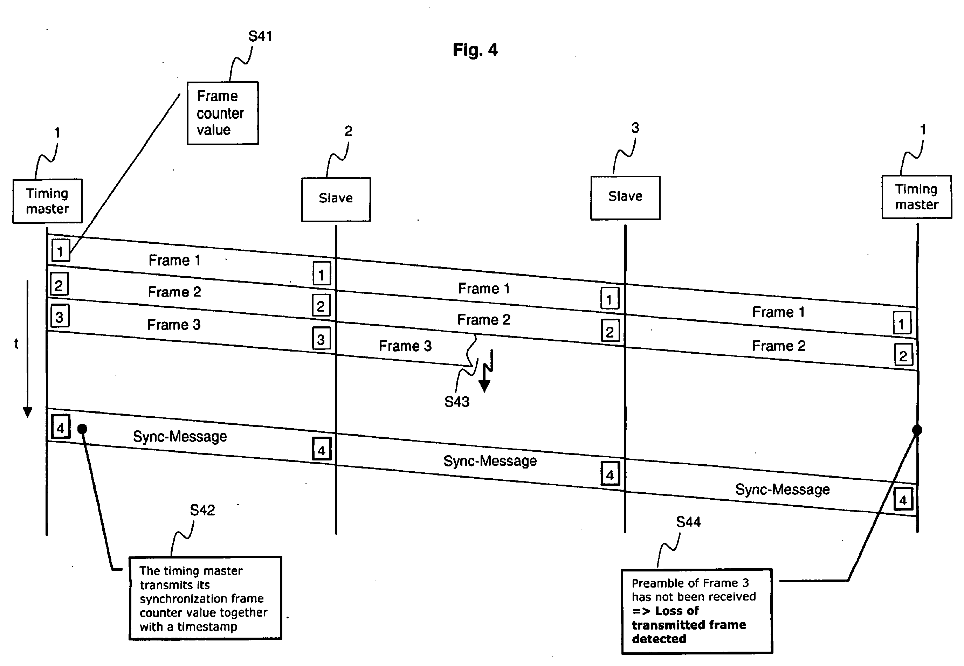

Fig. 4 illustrates a loss of a transmitted frame according to an exemplary embodiment of the invention. Shown is a timing diagram which includes a timing master 1 and, for illustrating purposes, only two slaves (slave 2 and slave 3). The left-most shown timing master 1 represents the timing master transmitting frames, wherein the right-most shown timing master 1 represents the timing master receiving frames. Fig. 4 also shows the frame counter values counted by the timing master 1 (S41), which are incremented after each transmitted frame. Also shown are the frame counter values of both slaves.

As indicated by S43, after slave 2 has forwarded frame 3, a corruption of the frame 3 occurs and thus, slave 3 is unable to detect frame 3. As a consequence, the timing master 1 is not able to receive the preamble of the previous sent frame at all and follows that a loss of the transmitted frame 3 has occurred (S44). The detection of the loss of a transmitted frame at S44 is equivalent to step S10 of Fig. 2.

Then, the timing master 1 transmits a message, which is indicated in Fig. 4 as sync-message, to all slaves of the network including its synchronization frame counter value and possibly also together with a timestamp (S42). Hereby, the number of the frame, which has been detected by the timing master 1 as being lost, corresponds to the frame counter value n, and wherein the synchronization frame counter value corresponds to the frame counter value n+1. In the example of Fig. 4, the frame 3 has been detected as being lost. Thus, the frame counter value at the timing master is "3" and the synchronization frame counter value which is included in the sync-message is "4". However, the synchronization frame counter value may also correspond to the number of frames that have been successfully transmitted by the timing master 1 before it has been determined that a frame is lost. In such a case, the synchronization frame counter value would be "2", as in the example of Fig. 4 only two frames have been transmitted successfully. After the slaves have received the message together with the synchronization frame counter value, they resynchronize by matching their frame counter value with the received synchronization frame counter value of the sync-message from the timing master 1.

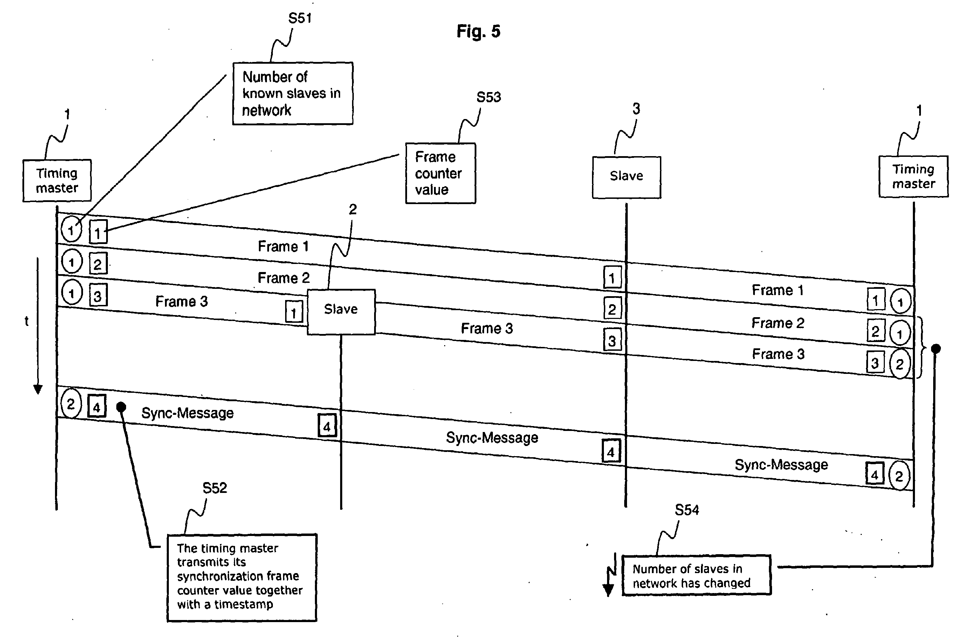

Fig. 5 illustrates a change in the number of slaves during operation of the synchronous network according to an exemplary embodiment of the invention. Shown is a timing diagram which includes the timing master 1 and slave 3. The left-most shown timing master 1 represents the timing master transmitting frames, wherein the right-most shown timing master 1 represents the timing master receiving frames. Fig. 5 also shows the frame counter values counted by the timing master 1 (S51), being incremented after each transmitted frame. Also shown are the frame counter values at slave 3. Further, the number of known slaves by the timing master 1 is shown (S51) for each transmitted frame.

During transportation of frames 1 and 2, only the slave 3 is known by the timing master 1, which is represented by the number of known slaves in the network being "1" in the example of Fig. 5 (S51). In Fig. 5 it is further shown that slave 2 is attached to the network after the timing master 1 has transmitted frame 3. Upon receiving the first frame, slave 2 sets its frame counter value to "1". As soon as the timing master 1 has compared the values of the number of known slaves in the network after the reception of frame 3, it may recognize that the number of slaves has changed (S54). Upon recognizing the change of number of slaves in the network, the timing master 1 assumes that the frame counter values of the slaves and the timing master itself is not the same. Hence, the timing master 1 determines that resynchronization is necessary and that one of the slaves, which will be slave 2 in this example, need an initial frame counter value. As already shown above, the resynchronization is carried out by the timing master 1 transmitting a message including the synchronization frame counter value and eventually together with a timestamp of the point in time the transmission of the message has taken place respectively the point in time the point in time the slave 2 has been attached to the network.

Then, the timing master 1 transmits a message, which is indicated in Fig. 5 as sync-message, to all slaves of the network including its synchronization frame counter value and possibly also together with a timestamp (S52). In the exemplary illustration of Fig. 5, the sync-message includes the synchronization frame counter value "4" and optionally may also include a value of the number of slaves, known by the timing master 1.

After the slaves have received the message together with the synchronization frame counter value, they resynchronize by matching their frame counter value with the received synchronization frame counter value of the sync-message from the timing master 1.

However, there may exist situations where upon attaching of a slave to the network not only the number of slaves changes (S54) but also a delay of frames respectively preamble may be detected or even a loss of a frame, as illustrated in Figs. 3 and 4.

As a result of such a situation, the timing master may transmit two sync-messages, one message for the resynchronization due to loss of a frame as shown in Fig. 4 and one message for resynchronization due to loss of synchronization as shown in Figs. 3 and 5.

Additionally to matching frame counter values of a timing master and the slaves, the timing master may also retransmit the delayed or corrupted frame after the network has been resynchronized. Further, concerning the synchronization frame counter value, the timing master may alternatively reset the frame counter value by using the value "0" as a synchronization frame counter value.

Further, by means of providing a timestamp to a sync-message, it is possible to document all occurred failures respectively unlock-states in the network. If these sync-messages, transmitted by the timing master, are stored, these data may be useful for an analysis of the failures after a certain amount of time.

In a further embodiment of the invention, all events occurring at the network interfaces respectively the slaves of a network may be marked with the frame counter value of the respective slave. This allows to protocol in detail all events occurring at the network, which may be used by the applications running at the slaves. For instance, changes in the network states or the reception of messaged may be listed with an exact time-stamp for a later use.

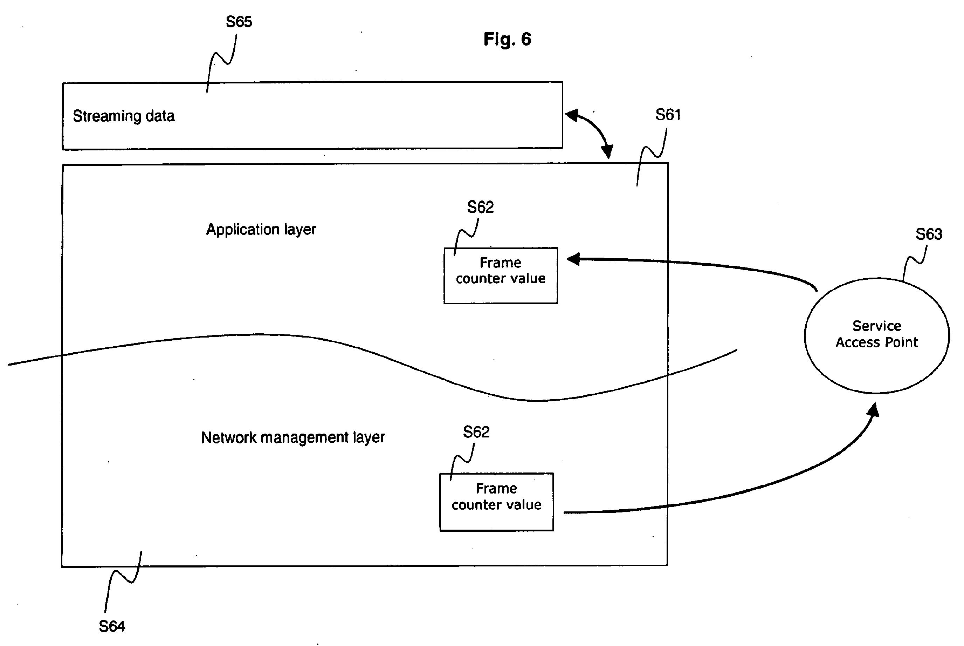

Fig. 6 illustrates the interface between the network management layer (S64) and the application layer (S61) according to an exemplary embodiment of the invention. The network management layer represents all lower layers that are responsible for the reception of frame counter values and for forwarding same to the application layer. The application layer represents all upper layer that are responsible for playback of, for instance, streaming data (S65). Hereby, the layers shown in Fig. 6 represent that of each slave.

In Fig. 6 it is shown how the network management layer communicates the frame counter value (S62) to the application layer so as to control the streaming data at the application layer. The streaming data may e.g. be a movie, whereby e.g. slave 1 represents the speaker and slave 2 represents the display, whereby they are remotely located from each other. In such a case, the streaming data is typically divided into an audio streaming data and a video streaming data and each data sequence has its independent playoff time.

As mentioned above, after a loss of synchronization, the timing master resynchronizes the network by providing its frame counter value to all slaves. Fig. 6 shows that the network management layer forwards a received frame counter value to a service access point (S63) which represents the interface between the lower and the upper layers. The service access point then forward the frame counter value to the application layer. As previously mentioned, the network wide transmission of the frame counter value denotes a system-wide time base. After the application layer has received the frame counter value, that is, all slaves have matched their frame counter values with the received one, the application layer is able to use the system-wide time base for, for instance, a lip-sync playback of the movie.

Another embodiment of the invention relates to the implementation of the above described various embodiments of the invention using hardware and software. It is recognized that the various embodiments and examples may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

## Claims

1. A method for matching frame counter values of a timing master and at least one slave in a synchronous network having a ring topology, the method comprising the steps of:
counting by the timing master frames of a continuous data stream being transmitted by the timing master by means of a frame counter, and
counting by the at least one slave frames of the continuous data stream received from the timing master by means of a frame counter,
**characterized by**
transmitting by the timing master a message comprising a synchronization frame counter value in case of the timing master detecting a loss of synchronization or loss of a transmitted frame in the continuous data stream, and
setting the frame counter value at the at least one slave to the synchronization frame counter value received from the timing master.

2. The method according to claim 1, **characterized in that** the synchronization frame counter value is used for synchronizing the frame counter value of the timing master and the frame counter value of the at least one slave to a common frame counter value.

3. The method according to claim 1 or 2, **characterized in that** the frame, at which the loss of synchronization has been detected by the timing master, corresponds to the frame counter value n, and wherein the synchronization frame counter value corresponds to the frame counter value n+1.

4. The method according to one of claims 1 to 3, **characterized in that** the synchronization frame counter value corresponds to the number of frames that have been successfully transmitted by the timing master before a loss of synchronization is detected.

5. The method according to one of claims 1 to 4, **characterized by** further comprising the step of detecting by the timing master whether a loss of synchronization in the continuous data stream has occurred.

6. The method according to one of claims 1 to 5, **characterized in that** the step of detecting whether a loss of synchronization in the continuous data stream has occurred comprises determining that a preamble of a transmitted frame is not received by the timing master at an expected point in time

7. The method according to one of claims 1 to 6, **characterized by** further comprising the step of detecting whether a loss of a transmitted frame in the continuous data stream has occurred.

8. The method according to one of claims 1 to 7, **characterized in that** the step of detecting whether a loss of a transmitted frame in the continuous data stream has occurred comprises determining a change in the number of slaves during operation of the synchronous network.

9. The method according to one of claims 1 to 8, **characterized in that** the timing master transmits the message, comprising its synchronization frame counter value, periodically.

10. The method according to one of claims 1 to 9, **characterized in that** the timing master transmits the message comprising its synchronization frame counter value together with a timestamp of a timing master's reference clock.

11. The method according to one of claims 1 to 10, **characterized in that** the synchronization frame counter value or the synchronization frame counter value together with a timestamp is comprised in a respective field of a control data section of a transmitted frame.

12. The method according to one of claims 1 to 11, **characterized in that** frames are transmitted periodically by the timing master.

13. The method according to claim 12, **characterized in that** the at least one slave synchronizes with the timing master's clock reference by determining a real-time clock reference based on the last received timestamp of the timing master's clock reference and the number of frames that have been received since the reception of the timestamp of the timing master's clock reference.

14. The method according to claim 13, **characterized by** further comprising the step of enabling an application executed by the at least one slave to access the determined real-time reference.

15. The method according to one of claims 1 to 14, **characterized by** further comprising the step of enabling an application executed by the at least one slave to access the frame counter value of the slave.

16. The method according to one of claims 1 to 15, **characterized in that** a network controller of the slave provides the frame counter.

17. The method according to one of claims 1 to 16, **characterized in that** changes in the states of the at least one slave or any events at the at least one slave are monitored and stored together with a respective frame counter value, and wherein the application executed by the at least one slave is enabled to access the respective stored information on changes in the states of the at least one slave or any events at the at least one slave together with the frame counter values.

18. The method according to one of claims 1 to 17, **characterized in that** the synchronous network having a ring topology is a Media Oriented Systems Transport network, referred to as MOST network, implemented in an automotive environment.

19. A timing master (1) in a synchronous network having a ring topology comprising:
a processing unit for maintaining a frame counter adapted to count frames of a continuous data stream being transmitted by a transmitter of the timing master, wherein the processing unit is further adapted to detect a loss of synchronization or loss of a transmitted frame in the continuous data stream,
**characterized in that**
the transmitter is further adapted to transmit a message comprising a synchronization frame counter value in case of the processing unit detecting a loss of synchronization or loss of a transmitted frame in the continuous data stream.

20. At least one slave (2, 3, 4) in a synchronous network having a ring topology comprising a processing unit for maintaining a frame counter adapted to count frames of a continuous data stream received from a timing master,
**characterized in that**
the processing unit is further adapted to set the frame counter value at the at least one slave to a synchronization frame counter value received from the timing master.

21. A system for matching frame counter values of a timing master and at least one slave in a synchronous network having a ring topology comprising:
the timing master according to claim 19, and
the at least one slave according to claim 20.

22. The system according to claim 21, **characterized by** further comprising means adapted to perform the steps of the method according to one of claims 2 to 18.

23. A computer-readable medium storing instructions that, when executed by a timing master, cause the timing master to initiate matching frame counter values of the timing master and at least one slave, by
counting frames of a continuous data stream being transmitted by a transmitter of the timing master, and
detecting a loss of synchronization or loss of a transmitted frame in the continuous data stream,
**characterized by**
transmitting a message comprising a synchronization frame counter value in case of detecting a loss of synchronization or loss of a transmitted frame in the continuous data stream.

24. A computer-readable medium storing instructions that, when executed by the at least one slave, cause the at least one slave to adapt its frame counter value, by
counting frames of the continuous data stream received from a timing master,
**characterized by**
setting the frame counter value at the at least one slave to a synchronization frame counter value received from the timing master.

## Patentansprüche

1. Verfahren zum Abgleichen von Rahmenzähler-Werten eines Timing-Master und wenigstens eines Slave in einem synchronen Netzwerk, das eine Ring-Topologie hat, wobei das Verfahren die folgenden Schritte umfasst:
Zählen von Rahmen eines kontinuierlichen Datenstroms, der durch den Timing-Master gesendet wird, mittels eines Rahmenzählers durch den Timing-Master, und
Zählen von Rahmen des von dem Timing-Master empfangenen kontinuierlichen Datenstroms mittels eines Rahmenzählers durch den wenigstens einen Slave,
**gekennzeichnet durch**
Senden einer Nachricht **durch** den Timing-Master, die einen Synchronisationsrahmenzähler-Wert umfasst, wenn der Timing-Master einen Verlust von Synchronisation oder Verlust eines gesendeten Rahmens in dem kontinuierlichen Datenstrom erfasst, und
Setzen des Rahmenzähler-Wertes an dem wenigstens einen Slave auf den von dem Timing-Master empfangenen Synchronisationsrahmenzähler-Wert.

2. Verfahren nach Anspruch 1,
**dadurch gekennzeichnet, dass**
der Synchronisationsrahmenzähler-Wert verwendet wird, um den Rahmenzähler-Wert des Timing-Master und den Rahmenzähler-Wert des wenigstens einen Slave auf einen gemeinsamen Rahmenzähler-Wert zu synchronisieren.

3. Verfahren nach Anspruch 1 oder 2,
**dadurch gekennzeichnet, dass**
der Rahmen, bei dem der Verlust von Synchronisation durch den Timing-Master erfasst worden ist, einem Rahmenzähler-Wert n entspricht, und wobei der Synchronisationsrahmenzähler-Wert dem Rahmenzähler-Wert n+1 entspricht.

4. Verfahren nach einem der Ansprüche 1 bis 3,
**dadurch gekennzeichnet, dass**
der Synchronisationsrahmenzähler-Wert der Anzahl von Rahmen entspricht, die durch den Timing-Master erfolgreich gesendet worden sind, bevor ein Verlust von Synchronisation erfasst wird.

5. Verfahren nach einem der Ansprüche 1 bis 4,
**dadurch gekennzeichnet, dass**
es des Weiteren den Schritt umfasst, in dem durch den Timing-Master erfasst wird, ob ein Verlust von Synchronisation in dem kontinuierlichen Datenstrom aufgetreten ist.

6. Verfahren nach einem der Ansprüche 1 bis 5,
**dadurch gekennzeichnet, dass**
der Schritt, in dem erfasst wird, ob ein Verlust von Synchronisation in dem kontinuierlichen Datenstrom aufgetreten ist, umfasst, dass bestimmt wird, dass eine Präambel eines gesendeten Rahmens durch den Timing-Master nicht zu einem erwarteten Zeitpunkt empfangen wird.

7. Verfahren nach einem der Ansprüche 1 bis 6,
**dadurch gekennzeichnet, dass**
es des Weiteren den Schritt umfasst, in dem erfasst wird, ob ein Verlust eines gesendeten Rahmens in dem kontinuierlichen Datenstrom aufgetreten ist.

8. Verfahren nach einem der Ansprüche 1 bis 7,
**dadurch gekennzeichnet, dass**
der Schritt, in dem erfasst wird, ob ein Verlust eines gesendeten Rahmens in dem kontinuierlichen Datenstrom aufgetreten ist, umfasst, dass eine Änderung der Anzahl von Slaves während des Betriebes des synchronen Netzwerks bestimmt wird.

9. Verfahren nach einem der Ansprüche 1 bis 8,
**dadurch gekennzeichnet, dass**
der Timing-Master die Nachricht, die seinen Synchronisationsrahmenzähler-Wert umfasst, periodisch sendet.

10. Verfahren nach einem der Ansprüche 1 bis 9,
**dadurch gekennzeichnet, dass**
der Timing-Master die Nachricht, die seinen Synchronisationsrahmenzähler-Wert umfasst, zusammen mit einem Zeitstempel eines Bezugstaktes des Timing-Master sendet.

11. Verfahren nach einem der Ansprüche 1 bis 10,
**dadurch gekennzeichnet, dass**
der Synchronisationsrahmenzähler-Wert oder der Synchronisationsrahmenzähler-Wert zusammen mit einem Zeitstempel in einem entsprechenden Feld eines Steuerdatenabschnitts eines gesendeten Rahmens enthalten ist.

12. Verfahren nach einem der Ansprüche 1 bis 11,
**dadurch gekennzeichnet, dass**
Rahmen durch den Timing-Master periodisch gesendet werden.

13. Verfahren nach Anspruch 12,
**dadurch gekennzeichnet, dass**
der wenigstens eine Slave Synchronisation mit dem Takt-Bezugswert des Timing-Master durchführt, indem er einen Echtzeit-Takt-Bezugswert auf Basis des letzten empfangenen Zeitstempels des Takt-Bezugswertes des Timing-Master und der Anzahl von Rahmen bestimmt, die seit dem Empfang des Zeitstempels des Takt-Bezugswertes des Timing-Master empfangen worden sind.

14. Verfahren nach Anspruch 13,
**dadurch gekennzeichnet, dass**
es des Weiteren den Schritt umfasst, in dem eine Anwendung aktiviert wird, die durch den wenigstens einen Slave ausgeführt wird, um auf den bestimmten Echtzeit-Bezugswert zuzugreifen.

15. Verfahren nach einem der Ansprüche 1 bis 14,
**dadurch gekennzeichnet, dass**
es des Weiteren den Schritt des Aktivierens einer Anwendung umfasst, die durch den wenigstens einen Slave ausgeführt wird, um auf den Rahmenzähler-Wert des Slave zuzugreifen.

16. Verfahren nach einem der Ansprüche 1 bis 15,
**dadurch gekennzeichnet, dass**
ein Netzwerk-Controller des Slave den Rahmenzähler bereitstellt.

17. Verfahren nach einem der Ansprüche 1 bis 16,
**dadurch gekennzeichnet, dass**
Änderungen der Zustände des wenigstens einen Slave oder jegliche Ereignisse an dem wenigstens einen Slave überwacht und zusammen mit einem entsprechenden Rahmenzähler-Wert gespeichert werden, und wobei die durch den wenigstens einen Slave ausgeführte Anwendung aktiviert wird, um auf die jeweiligen gespeicherten Informationen über Änderungen der Zustände des wenigstens einen Slave oder jegliche Ereignisse an dem wenigstens einen Slave zusammen mit den Rahmenzähler-Werten zuzugreifen.

18. Verfahren nach einem der Ansprüche 1 bis 17,
**dadurch gekennzeichnet, dass** das synchrone Netzwerk, das eine Ring-Topologie hat, ein MOST-Netzwerk (Media Oriented Systems Transport Network) ist, das in einem Kraftfahrzeug implementiert ist.

19. Timing-Master (1) in einem synchronen Netzwerk, das eine Ring-Topologie hat, wobei er umfasst:
eine Verarbeitungseinheit, mit der ein Rahmenzähler geführt wird, der so eingerichtet ist, dass er Rahmen eines kontinuierlichen Datenstroms zählt, der durch eine Sendeeinrichtung des Timing-Master gesendet wird, wobei die Verarbeitungseinheit des Weiteren so eingerichtet ist, dass sie einen Verlust von Synchronisation oder Verlust eines gesendeten Rahmens in dem kontinuierlichen Datenstrom erfasst,
**dadurch gekennzeichnet, dass**
die Sendeeinrichtung des Weiteren so eingerichtet ist, dass sie eine Nachricht sendet, die einen Synchronisationsrahmenzähler-Wert umfasst, wenn die Verarbeitungseinheit einen Verlust von Synchronisation oder Verlust eines gesendeten Rahmens in dem kontinuierlichen Datenstrom erfasst.

20. Wenigstens ein Slave (2, 3, 4) in einem synchronen Netzwerk, das eine Ring-Topologie hat, und eine Verarbeitungseinheit umfasst, mit der ein Rahmenzähler geführt wird, der so eingerichtet ist, dass Rahmen eines von einem Timing-Master empfangenen kontinuierlichen Datenstroms zählt,
**dadurch gekennzeichnet, dass**
die Verarbeitungseinheit des Weiteren so eingerichtet ist, dass sie den Rahmenzähler-Wert an dem wenigstens einen Slave auf einen von dem Timing-Master empfangenen Synchronisationsrahmenzähler-Wert setzt.

21. System zum Abgleichen von Rahmenzähler-Werten eines Timing-Master und wenigstens eines Slave in einem synchronen Netzwerk, das eine Ring-Topologie hat, wobei das System umfasst:
den Timing-Master nach Anspruch 19, und
den wenigstens einen Slave nach Anspruch 20.

22. System nach Anspruch 21,
**dadurch gekennzeichnet, dass**
es des Weiteren eine Einrichtung umfasst, die zum Durchführen der Schritte des Verfahrens nach einem der Ansprüche 2 bis 18 eingerichtet ist.

23. Computerlesbares Medium, das Befehle speichert, die, wenn sie durch einen Timing-Master ausgeführt werden, den Timing-Master veranlassen, Abgleichen von Rahmenzähler-Werten des Timing-Master und wenigstens eines Slave einzuleiten, indem er Rahmen eines kontinuierlichen Datenstroms zählt, der durch eine Sendeeinrichtung des Timing-Master gesendet wird, und
einen Verlust von Synchronisation oder Verlust eines gesendeten Rahmens in dem kontinuierlichen Datenstrom erfasst,
**gekennzeichnet durch**
Senden einer Nachricht, die einen Synchronisationsrahmenzähler-Wert umfasst, beim Erfassen eines Verlustes von Synchronisation oder Verlustes eines gesendeten Rahmens in dem kontinuierlichen Datenstrom.

24. Computerlesbares Medium, das Befehle speichert, die, wenn sie durch den wenigstens einen Slave ausgeführt werden, den wenigstens einen Slave veranlassen, seinen Rahmenzähler-Wert anzupassen, indem er
Rahmen des von einem Timing-Master empfangenen kontinuierlichen Datenstroms zählt,
**gekennzeichnet durch**
Setzen des Rahmenzähler-Wertes an dem wenigstens einen Slave auf einen von dem Timing-Master empfangenen Synchronisationsrahmenzähler-Wert.

## Revendications

1. Procédé permettant de faire correspondre des valeurs de compteurs de trames d'un pilote de séquencement et d'au moins un esclave dans un réseau synchrone présentant une topologie en anneau, le procédé comprenant les étapes suivantes :
le comptage, par le pilote de séquencement, de trames d'un flux continu de données transmis par le pilote de séquencement, au moyen d'un compteur de trames, et
le comptage, par le ou les esclaves, de trames du flux continu de données reçu en provenance du pilote de séquencement, au moyen d'un compteur de trames,
**caractérisé par**
la transmission, par le pilote de séquencement, d'un message comprenant une valeur de synchronisation de compteurs de trames dans le cas où le pilote de séquencement détecte une perte de synchronisation ou la perte d'une trame transmise dans le flux continu de données, et
le réglage de la valeur du compteur de trames, au niveau du ou des esclaves, à la valeur de synchronisation de compteurs de trames reçue en provenance du pilote de séquencement.

2. Procédé selon la revendication 1, **caractérisé en ce que** la valeur de synchronisation de compteurs de trames est utilisée pour synchroniser la valeur du compteur de trames du pilote de séquencement et la valeur du compteur de trames du ou des esclaves à une valeur commune de compteurs de trames.

3. Procédé selon la revendication 1 ou 2, **caractérisé en ce que** la trame à laquelle la perte de synchronisation a été détectée par le pilote de séquencement correspond à la valeur de compteur de trames n et dans lequel la valeur de synchronisation de compteurs de trames correspond à la valeur de compteur de trames n + 1.

4. Procédé selon l'une des revendications 1 à 3, **caractérisé en ce que** la valeur de synchronisation de compteurs de trames correspond au nombre de trames qui ont été transmises avec succès par le pilote de séquencement avant qu'une perte de synchronisation soit détectée.

5. Procédé selon l'une des revendications 1 à 4, **caractérisé en ce qu'**il comprend en outre l'étape de détection, par le pilote de séquencement, de ce qu'une perte de synchronisation s'est produite dans le flux continu de données.

6. Procédé selon l'une des revendications 1 à 5, **caractérisé en ce que** l'étape de détection de ce qu'une perte de synchronisation s'est produite dans le flux continu de données comprend la détermination de ce que le préambule d'une trame transmise n'a pas été reçu par le pilote de séquencement à un point attendu dans le temps.

7. Procédé selon l'une des revendications 1 à 6, **caractérisé en ce qu'**il comprend en outre l'étape de détection de ce qu'une perte de trame transmise s'est produite dans le flux continu de données.

8. Procédé selon l'une des revendications 1 à 7, **caractérisé en ce que** l'étape de détection de ce qu'une de trame transmise s'est produite dans le flux continu de données comprend la détermination d'une modification du nombre d'esclaves pendant le fonctionnement du réseau synchrone.

9. Procédé selon l'une des revendications 1 à 8, **caractérisé en ce que** le pilote de séquencement transmet périodiquement le message comprenant sa valeur de synchronisation de compteurs de trames.

10. Procédé selon l'une des revendications 1 à 9, **caractérisé en ce que** le pilote de séquencement transmet le message comprenant sa valeur de synchronisation de compteurs de trames en même temps que la marque temporelle d'une horloge de référence du pilote de séquencement.

11. Procédé selon l'une des revendications 1 à 10, **caractérisé en ce que** la valeur de synchronisation de compteurs de trames ou la valeur de synchronisation de compteurs de trames transmise en même temps qu'une marque temporelle est comprise dans le champ respectif d'une section de données de commande d'une trame transmise.

12. Procédé selon l'une des revendications 1 à 11, **caractérisé en ce que** des trames sont transmises périodiquement par le pilote de séquencement.

13. Procédé selon la revendication 12, **caractérisé en ce que** le ou les esclaves se synchronisent avec la référence d'horloge du pilote de séquencement en déterminant une référence d'horloge en temps réel fondée sur la dernière marque temporelle reçue de la référence d'horloge du pilote de séquencement et sur le nombre de trames qui ont été reçues depuis la réception de la marque temporelle de la référence d'horloge du pilote de séquencement.

14. Procédé selon la revendication 13, **caractérisé en ce qu'**il comprend en outre l'étape d'autorisation d'une application exécutée par le ou les esclaves pour accéder à la référence définie en temps réel.

15. Procédé selon l'une des revendications 1 à 14, **caractérisé en ce qu'**il comprend en outre l'étape d'autorisation d'une application exécutée par le ou les esclaves pour accéder à la valeur du compteur de trames de l'esclave.

16. Procédé selon l'une des revendications 1 à 15, **caractérisé en ce que** le contrôleur de réseau de l'esclave procure le compteur de trames.

17. Procédé selon l'une des revendications 1 à 16, **caractérisé en ce que** des modifications des états du ou des esclaves, ou que tout événement au niveau du ou des esclaves, sont surveillés et mémorisés ensemble avec une valeur respective de compteurs de trames, et dans lequel l'application exécutée par le ou les esclaves est autorisée à accéder aux informations respectives mémorisées sur des modifications des états du ou des esclaves ou de tout événement au niveau du ou des esclaves avec les valeurs de compteurs de trames.

18. Procédé selon l'une des revendications 1 à 17, **caractérisé en ce que** le réseau synchrone présentant une topologie en anneau est un réseau de Transport de Systèmes Orientés Multimédias, appelé réseau MOST, mis en oeuvre dans un environnement automobile.

19. Pilote de séquencement (1) dans un réseau synchrone présentant une topologie en anneau, comprenant :
une unité de traitement permettant de maintenir un compteur de trames conçu pour compter des trames d'un flux continu de données transmis par un émetteur du pilote de séquencement, dans lequel l'unité de traitement est en outre conçue pour détecter une perte de synchronisation ou
la perte d'une trame transmise dans le flux continu de données,
**caractérisé en ce que**
l'émetteur est en outre conçu pour émettre un message comprenant une valeur de synchronisation de compteurs de trames dans le cas où l'unité de traitement détecte une perte de synchronisation ou la perte d'une trame transmise dans le flux continu de données.

20. Au moins un esclave (2, 3, 4) dans un réseau synchrone présentant une topologie en anneau comprenant une unité de traitement pour maintenir un compteur de trames conçu pour compter des trames d'un flux continu de données reçu en provenance d'un pilote de séquencement,
**caractérisé en ce que**
l'unité de traitement est en outre conçue pour régler la valeur de compteur de trames, au niveau du ou des esclaves, à une valeur de synchronisation de compteurs de trames reçue en provenance du pilote de séquencement.

21. Système permettant de faire correspondre des valeurs de compteurs de trames d'un pilote de séquencement et d'au moins un esclave dans un réseau synchrone présentant une topologie en anneau, comprenant :
le pilote de séquencement conforme à la revendication 19, et
le ou les esclaves conformes à la revendication 20.

22. Système selon la revendication 21, **caractérisé en ce qu'**il comprend en outre un moyen conçu pour exécuter les étapes du procédé conformément à l'une des revendications 2 à 18.

23. Support pouvant être lu par un ordinateur, stockant des instructions qui, lorsqu'elles sont exécutées par un pilote de séquencement, amènent le pilote de séquencement à initier la mise en correspondance de valeurs de compteurs de trames du pilote de séquencement et d'au moins un esclave,
en comptant les trames d'un flux continu de données transmis par un émetteur du pilote de séquencement, et
en détectant une perte de synchronisation ou la perte d'une trame transmise dans le flux continu de données,
**caractérisé par**
la transmission d'un message comprenant une valeur de synchronisation de compteurs de trames dans le cas de la détection d'une perte de synchronisation ou de la perte d'une trame transmise dans le flux continu de données.

24. Support pouvant être lu par un ordinateur, stockant des instructions qui, lorsqu'elles sont exécutées par le ou les esclaves, amènent le ou les esclaves à adapter leur valeur de compteur de trames,
en comptant des trames du flux continu de données reçu en provenance d'un pilote de séquencement,
**caractérisé par**
le réglage de la valeur de compteur de trames au niveau du ou des esclaves sur une valeur de synchronisation de compteurs de trames reçue en provenance du pilote de séquencement.
